# DEMANDE DE BREVET EUROPEEN

(11) **EP 4 300 080 A1**
(43) Date de publication de la demande: **03.01.2024**
(21) Numéro de dépôt: 23181038.3
(22) Date de dépôt: 22.06.2023
(51) Int. Cl.: G01N 21/65, G01N 21/85, G01J 3/44

(54) **EMBOUT D'IMMERSION ET SONDE RAMAN ASSOCIÉE**

(30) Priorité: 30.06.2022 FR 2206592
(71) Demandeur: Indatech, 34830 Clapiers (FR)
(72) Inventeur: CHAUCHARD, Fabien, CLAPIERS (FR); BROUCKAERT, Davinia, CLAPIERS (FR)
(74) Mandataire: Cabinet Beau de Loménie

(57) **Abrégé**

Embout d'immersion (20) de sonde pour spectroscopie Raman comportant un corps cylindrique (30) muni d'une optique de collimation (32) et/ou d'un hublot (34) et destiné à être immergé dans un liquide à analyser (12), le corps cylindrique étant constitué de deux parties séparées par une fente (62) destinée à laisser passer à travers elle le liquide à analyser, la première partie (30A) étant creuse et parcourue depuis une première extrémité par des signaux lumineux d'émission et de réception, l'autre extrémité opposée à la première étant fermée par l'optique de collimation et/ou le hublot, la seconde partie (30B) étant configurée pour interdire toute réception de lumière parasite autre que celle traversant la fente et comportant une pièce en un matériau absorbant (64) la lumière disposée en regard du hublot.

## Description

### Domaine Technique

La présente invention se rapporte au domaine de la mesure par spectromètre Raman et elle concerne plus particulièrement un embout d'immersion d'une sonde pour spectroscopie Raman.

### Technique antérieure

La spectroscopie Raman est de plus en plus utilisée dans certains domaines de pointe, en particulier dans les biotechnologies. Elle peut apporter en temps réel des informations sur la concentration de plusieurs nutriments tel que le glucose, le lactate, la glutamine. Il est aussi possible d'obtenir des informations sur la concentration totale en anticorps fabriqués par les cellules ou sur la glycosylation des anticorps.

Toutefois, les procédés de cultures cellulaires sont long (plusieurs semaines) et complexes à contrôler du fait d'une utilisation de cellules vivantes de comportement très variable et nécessitant des besoins en nutriments constants (la consommation du milieu nutritionnel dépendant du type de cellules) pour garantir une bonne croissance et une production cellulaire suffisante. En outre, ces procédés sont difficiles à répéter à un niveau industriel du fait d'un effet de batch et de changement d'échelle (passage de réacteur expérimental de 0.51 à plusieurs centaines de litres en phase de production).

La spectroscopie Raman utilise le principe de diffusion inélastique qui est généré lors de l'illumination d'un échantillon par une lumière monochromatique intense. Les appareils actuels utilisent une source laser avec une longueur d'onde fixe. Cette source est focalisée sur un spot de petit diamètre (typiquement de 100µm à 200µm) afin d'avoir une densité suffisante pour générer l'effet Raman. Celui-ci est très faible par rapport aux autres phénomènes d'interaction existant entre la lumière et la matière et qui sont, par ordre d'importance : la diffusion élastique (Rayleigh, Mie), l'absorption de la lumière, la fluorescence et l'effet Raman.

L'effet Raman étant le plus faible de ces phénomènes d'interaction lumière/matière, l'appareil de mesure (spectromètre à laser), pour capturer le moindre photon, se doit d'éliminer par une série de filtres et par un choix de longueur d'onde adaptée ces autres phénomènes non désirés. Par exemple, les lasers à 532nm générant souvent de la fluorescence dans les milieux biologiques, les spectromètres Raman reposent plutôt sur l'utilisation de lasers de longueur d'onde supérieure, notamment à 785nm ou 830nm.

De plus, lorsque l'on souhaite effectuer une mesure de liquide in situ dans de tels milieux biologiques, du fait de la grande sensibilité à l'humidité et à la chaleur des éléments optiques, il est impossible de venir directement plaquer l'appareil de mesure contre ou dans ce liquide et il est donc nécessaire de déporter cette mesure au moyen de fibres optiques.

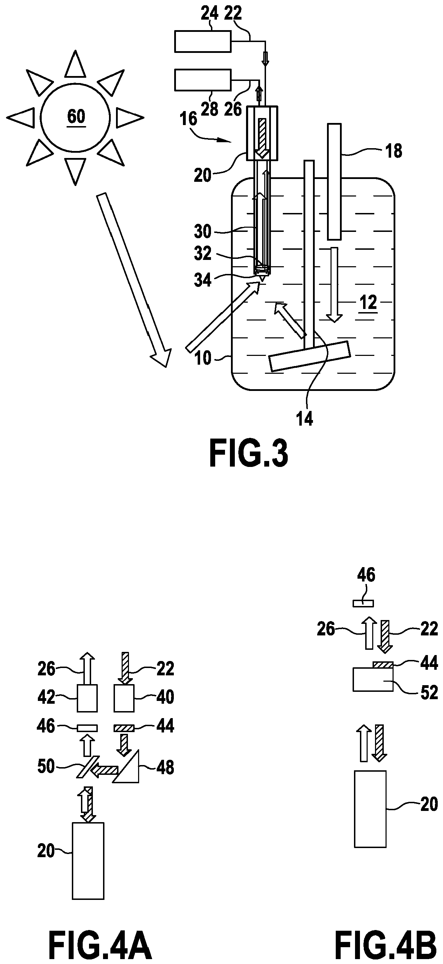

La figure 3 montre un exemple actuel d'un réacteur biologique 10 contenant un liquide 12 dont on souhaite analyser les propriétés. Ce réacteur est muni d'un agitateur à pales 14 et peut recevoir une sonde Raman 16 et éventuellement une autre sonde optique (par exemple un turbidimètre optique 18). La sonde Raman comporte un embout d'immersion 20 plongé dans le liquide à analyser 12 et elle est reliée par une première fibre 22 à une source laser 24 délivrant un signal d'émission laser et par une seconde fibre 26 à un spectromètre 28 recevant un signal lumineux de réception à analyser (le signal de mesure). L'embout d'immersion 20 est généralement constitué d'un corps cylindrique 30 muni d'une optique de collimation (lentille ou microbille 32) et pourvu à son extrémité libre d'un hublot 34 (la lentille ou la bille pouvant aussi faire office de hublot) maintenu fixement au corps 30 par joint, colle, brasure, soudure ou tout autre moyen permettant de constituer un ensemble parfaitement étanche vis-à-vis du liquide à analyser 12.

La structure interne de la sonde est détaillée aux figures 4A et 4B qui en illustrent deux variantes standards. Sur la figure 4A, la fibre d'émission 22 et la fibre de réception 26 sont indépendantes et comportent donc chacune en extrémité de fibre un collimateur 40, 42 suivi par un filtre, filtre 44 pour nettoyer le signal lumineux sortant de la fibre d'émission 22 connectée au laser 24 qui émet la radiation ou filtre 46 pour ne laisser passer que le signal de mesure résultant de l'effet Raman issu du milieu analysé (l'échantillon). Un prisme 48 et une lame dichroïque 50 complètent cette structure pour séparer le signal lumineux émis du signal de mesure reçu circulant tous deux dans l'embout d'immersion 20. Parfois la fibre d'émission 22 et celle de réception 26 peuvent être combinées dans un bundle de fibres et collimatées avec un seul élément optique 52. Dans ce cas, les filtres 44, 46 sont le plus souvent déposés directement sur les fibres, ou bien encore montés en sortie de fibre comme illustré à la figure 4B.

Malgré de nombreux travaux d'optimisation, la mise en oeuvre de la spectroscopie Raman reste complexe. En effet, la plupart des réacteurs biologiques sont transparents (en verre ou plastique jetable) afin que les opérateurs puissent voir comment se déroule la culture. Il en résulte une grande sensibilité à la lumière ambiante qui par réflexion sur le bas du réacteur vient impacter l'embout d'immersion 20 (la référence 60 sur la figure 3) ou venant d'autres capteurs 14, 18 utilisés dans le réacteur et pouvant alors interférer avec la mesure (par exemple à cause de réflexions sur les pales de l'agitateur ou d'autres surfaces métalliques). Afin d'éliminer ce phénomène, les industriels sont obligés de recouvrir leur réacteur d'un drap noir ou d'un papier aluminium, pratique acceptable en phase expérimentale ou de développement mais inenvisageable en phase de production. De même, la mesure souffre d'un manque de sensibilité important dû souvent aux concentrations très faibles en nutriment dans le milieu, résultant d'une très forte dilution, et à la turbidité de ce milieu qui augmente avec la croissance cellulaire et fait perdre de l'intensité Raman (spot moins intense et plus diffus).

### Exposé de l'invention

La présente invention a donc pour but principal de pallier les inconvénients précités en limitant l'effet parasite de la lumière ambiante ou d'autres capteurs optiques présent dans le réacteur et en améliorant le niveau du signal Raman recueilli. Un autre but est d'augmenter les densités cellulaires pour améliorer la rentabilité du procédé.

Ces buts sont atteints par un embout d'immersion pour spectroscopie Raman comportant un corps cylindrique muni d'une optique de collimation et/ou d'un hublot et destiné à être immergé dans un liquide à analyser, caractérisé en ce que le corps cylindrique est constitué de deux parties séparées par une fente destinée à laisser passer à travers elle le liquide à analyser, la première partie étant creuse et parcourue depuis une première extrémité par des signaux lumineux d'émission et de réception, l'autre extrémité opposée à la première étant fermée par l'optique de collimation et/ou le hublot, la seconde partie étant configurée pour interdire toute réception de lumière parasite autre que celle traversant la fente et comportant une pièce en un matériau absorbant la lumière disposée en regard du hublot.

Ainsi, avec cette fente et l'intégration d'un matériau absorbant, on limite les effets de lumière parasites et améliore grandement les performances de la sonde Raman.

Selon un mode de réalisation avantageux, le matériau absorbant la lumière constitue la partie centrale d'un matériau réfléchissant de forme sphérique concave permettant de rediriger le signal Raman recueilli vers un point de focalisation unique correspondant au point de focalisation de l'optique de collimation.

De préférence, la fente présente une largeur L comprise entre 0.5 et 10 mm et typiquement de l'ordre de 3mm et une épaisseur E sensiblement égale à une largeur du hublot.

Avantageusement, le matériau absorbant la lumière est un polymère noir ou un inox traité noir absorbant au moins 90% de la lumière dans une plage de ± 300 nm autour de la longueur d'onde du signal lumineux d'émission.

De préférence, le corps cylindrique est fabriqué en métal, dans le cas d'embouts réutilisables, ou en plastique, dans le cas d'embouts à usage unique.

Avantageusement, le corps cylindrique est soudé à une poche de prélèvement de liquide en cas d'embouts à usage unique.

Selon les modes de réalisation envisagés, la première partie creuse peut être configurée pour recevoir à la première extrémité une fibre optique d'émission/réception unique, ou un bundle de fibres optiques circulaires avec la fibre d'émission disposée au centre et les fibres de réception autour de cette fibre centrale, ou encore un bundle de fibres optiques circulaires avec des fibres d'émission disposées en périphérie d'une fibre de réception.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur les lesquels :
[Fig. 1] la figure 1 illustre un premier exemple de réalisation d'un embout d'immersion conforme à l'invention,
[Fig. 1A] la figure 1A illustre une variante de réalisation de l'embout d'immersion de la figure 1,
[Fig. 2] la figure 2 illustre un second exemple de réalisation d'un embout d'immersion conforme à l'invention,
[Fig. 2A] la figure 2A illustre une variante de réalisation de l'embout d'immersion de la figure 2,
[Fig. 3] la figure 3 montre un réacteur équipé pour une spectroscopie Raman, et
[Fig. 4A-4B] les figures 4A et 4B montrent deux exemples de structure interne d'une sonde Raman adaptée aux embouts d'immersion des figures 1 et 2.

### Description des modes de réalisation

Le principe de l'invention repose sur un embout d'immersion dont la structure particulière innovante associée à une chaîne de mesure traditionnelle permet de répondre à de nombreuses problématiques industrielles pour le contrôle de procédés de formulation chimiques.

Typiquement, les composés vont émettre des bandes ou raies spectrales à des longueurs d'onde spécifiques dans le proche Infrarouge (NIR) permettant d'identifier le composé et le quantifier. Cette quantification se fait classiquement soit directement par une régression linéaire faite sur ces bandes, soit par une approche de modélisation multivariée (chimiométrie et machine learning). Dans ce dernier cas, différents algorithmes connus de l'homme du métier et qu'il est donc inutile de détailler, peuvent être employés, comme la PLS (Partial Least Square), l'ACP (Analyse de Composantes Principales) ou encore les SVM (Support Vector Machine) pour les méthodes non linéaires.

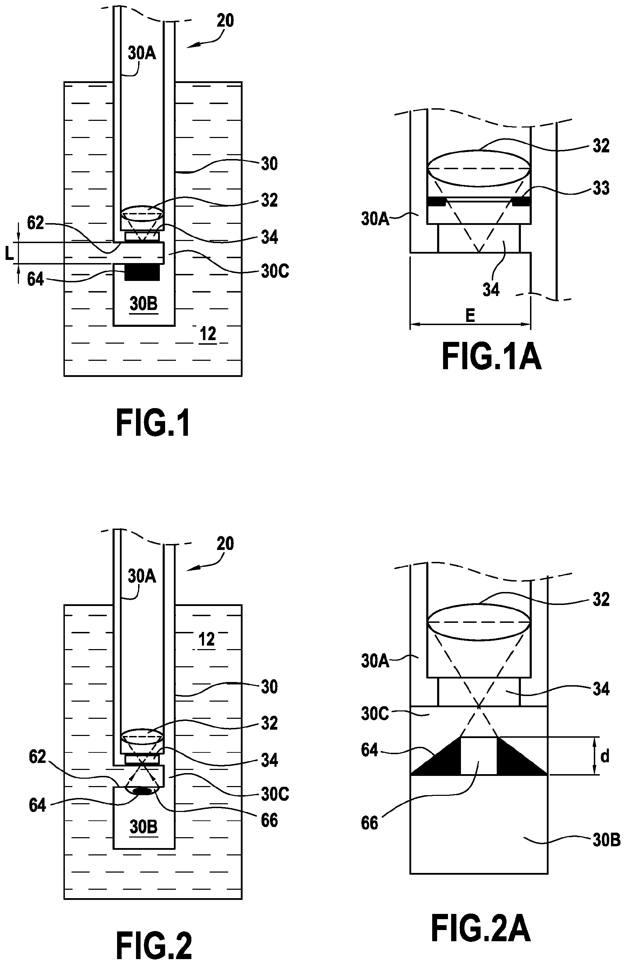

Conformément à l'invention, et comme le montre l'exemple de réalisation de la figure 1, pour limiter l'effet de la lumière parasite, l'embout d'immersion qui présente avantageusement un corps cylindrique 30, comporte une fente 62 de largeur L séparant le corps en deux parties 30A, 30B et laissant passer à travers elle le milieu liquide 12 pour la mesure (la fente présente bien entendu une épaisseur E inférieure au diamètre du corps 30 définissant avec l'épaisseur de corps restante une partie solide 30C de liaison entre les parties 30A et 30B). La première partie 30A dont une première extrémité (non représentée sur cette figure) est destinée à recevoir la fibre d'émission/réception ou les fibres d'émission et de réception est creuse afin de laisser passer le signal laser collimaté issu de la ou des fibres d'émission ainsi que le signal de mesure Raman émis en retour par l'échantillon, l'autre extrémité opposée à la première étant fermée par la lentille 32 et/ou le hublot 34. La seconde partie 30B est avantageusement pleine (mais un simple capot ou capuchon est aussi possible) et interdit donc toute réception de lumière pouvant entrer par le dessous dans les dispositifs de l'état de l'art (voir la figure 3), cette lumière ambiante ou artificielle ne pouvant en effet pénétrer l'embout d'immersion que sur le côté au travers de la fente 64, sur une largeur maximale définie par la largeur L de la fente (avantageusement comprise entre 0.5 et 10 mm, plus particulièrement entre 1 et 5 mm et typiquement de l'ordre de 3 mm). Cette seconde partie comporte en outre une pièce 64 disposée en regard du hublot 34 et formée d'un matériau absorbant la lumière (par exemple un polymère noir ou un inox traité noir ayant une capacité d'absorption de la lumière visible et proche infrarouge d'au moins 90%). Plus particulièrement, il conviendra d'absorber le rayonnement dans une plage de plus ou moins 300 nm autour de la longueur d'onde du signal d'émission laser. Ainsi, pour un laser émettant sur 785nm, le matériau sera choisi de telle sorte à absorber la lumière sur une plage de 485 à 1085nm correspondant à la zone ou les raies d'émission Raman stokes et antistokes vont apparaitre. Ce matériau absorbant permet ainsi d'éliminer toute lumière externe qui aurait réussi à passer la fente. Par ailleurs, il limite les réflexions et diffusions Rayleigh laser qui apparaissent en particulier sur des matrices turbides. Cette configuration est particulièrement avantageuse lorsque l'émission laser est effectuée par une fibre unique qui assure également la réception du signal de mesure Raman.

Pour éliminer les lumières parasites internes à l'embout d'immersion, un matériau absorbant la lumière 33 peut être ajouté entre la lentille 32 et le hublot 34 comme illustré sur la figure 1B. Une céramique noire, un métal traité noir en surface ou un plastique PEEK noir ayant une capacité d'absorption de la lumière visible et proche infrarouge supérieure à 90% peuvent tout à fait convenir comme matériau absorbant.

L'embout d'immersion peut être en métal, dans le cas d'embouts réutilisables, ou en plastique dans le cas de systèmes à usage unique (utilisation de l'embout pour un seul batch, l'embout d'immersion étant livré soudé à la poche de prélèvement de liquide).

La figure 2 montre un autre exemple de réalisation qui permet une amplification supplémentaire du signal Raman recueilli en combinant le matériau absorbant 64 avec un matériau réfléchissant 66 et en redirigeant le signal Raman vers un point de focalisation unique correspondant au point de focalisation de l'optique de collimation. Cette redirection vers un point de focalisation unique évite que seule la diffusion classique de Rayleigh soit amplifiée. Le matériau réfléchissant est formé dans une pièce de forme sphérique concave dont le rayon externe est égal à celui du hublot 34 qui lui fait face et donc avec un rayon sensiblement égal à l'épaisseur E de la fente, pour réfléchir un point de focalisation devant le hublot (la fenêtre de mesure). En son centre, cette pièce sphérique comporte le matériau absorbant 64.

Dans un autre mode de réalisation non représenté, selon le type de fibres optiques employées, les matériaux absorbant 64 et réfléchissant 66 peuvent être intervertis. Le matériau réfléchissant étant disposé au centre et le matériau absorbant à sa périphérie. Plus précisément, dans le cas où l'illumination laser est effectuée par un bundle de fibres optiques circulaires avec la fibre d'émission disposée au centre et les fibres de réception autour de cette fibre centrale, il convient de placer le matériau absorbant au centre et le matériau réfléchissant en périphérie. Par contre, dans le cas où cette illumination est faite par une fibre d'émission/réception monocoeur multimode, on mettra le matériau réfléchissant au centre et le matériau absorbant sur les rebords comme illustré à la figure 2A. Dans cette variante de réalisation, le matériau réfléchissant (un miroir semi-sphérique ou plat en métal blanc ou céramique blanche réfléchissant la lumière visible ou proche infrarouge d'au moins 95%) est positionné à une distance d au plus près possible du hublot de l'embout d'immersion (la fenêtre de la sonde), c'est à dire à environ la moitié de la largeur L de la fente (soit entre 500 µm et 2,5 mm pour une fente comprise respectivement entre 1 et 5 mm). Avantageusement, le matériau absorbant présente une forme conique permettant d'absorber d'avantage de lumière tout en permettant une circulation fluide du liquide.

## Revendications

1. Embout d'immersion (20) de sonde pour spectroscopie Raman comportant un corps cylindrique (30) muni d'une optique de collimation (32) et/ou d'un hublot (34) et destiné à être immergé dans un liquide à analyser (12), **caractérisé en ce que** le corps cylindrique est constitué de deux parties (30A, 30B) séparées par une fente (62) destinée à laisser passer à travers elle le liquide à analyser, la première partie (30A) étant creuse et parcourue depuis une première extrémité par des signaux lumineux d'émission et de réception, l'autre extrémité opposée à la première étant fermée par l'optique de collimation et/ou le hublot, la seconde partie (30B) étant configurée pour interdire toute réception de lumière parasite autre que celle traversant la fente et comportant une pièce en un matériau absorbant la lumière (64) disposée en regard du hublot.

2. Embout d'immersion selon la revendication 1, dans lequel le matériau absorbant la lumière constitue la partie centrale d'un matériau réfléchissant (66) de forme sphérique concave permettant de rediriger le signal Raman recueilli vers un point de focalisation unique correspondant au point de focalisation de l'optique de collimation.

3. Embout d'immersion selon la revendication 1 ou la revendication 2, dans lequel la fente présente une largeur L comprise entre 0.5 et 10 mm et typiquement de l'ordre de 3 mm et une épaisseur E sensiblement égale à une largeur du hublot.

4. Embout d'immersion selon la revendication 1 ou la revendication 2, dans lequel le matériau absorbant la lumière est un polymère noir ou un inox traité noir absorbant au moins 90% de la lumière dans une plage de ± 300 nm autour de la longueur d'onde du signal lumineux d'émission.

5. Embout d'immersion selon la revendication 1 ou la revendication 2, dans lequel le corps cylindrique est fabriqué en métal, dans le cas d'embouts réutilisables, ou en plastique, dans le cas d'embouts à usage unique.

6. Embout d'immersion selon la revendication 5, dans lequel le corps cylindrique est soudé à une poche de prélèvement de liquide en cas d'embouts à usage unique.

7. Embout d'immersion selon la revendication 1, dans lequel la première partie creuse est configurée pour recevoir à la première extrémité une fibre optique d'émission/réception unique.

8. Embout d'immersion selon la revendication 2, dans lequel la première partie creuse est configurée pour recevoir à la première extrémité un bundle de fibres optiques circulaires avec la fibre d'émission disposée au centre et les fibres de réception autour de cette fibre centrale.

9. Embout d'immersion selon la revendication 2, dans lequel la première partie creuse est configurée pour recevoir à la première extrémité un bundle de fibres optiques circulaires avec des fibres d'émission disposée en périphérie d'une fibre de réception.

10. Sonde Raman comportant un embout d'immersion selon l'une quelconque des revendications 1 à 9.
